Europäisches Patentamt

European Patent Office

Office européen des brevets

(19)

(11) **EP 1 736 795 A1**

(12) **EUROPEAN PATENT APPLICATION**
published in accordance with Art. 158(3) EPC

(43) Date of publication:
27.12.2006 Bulletin 2006/52

(51) Int Cl.:
*G01S 7/282* (2006.01)   *H03B 5/06* (2006.01)
*H04B 1/69* (2006.01)

(21) Application number: 06712515.3

(22) Date of filing: 27.01.2006

(86) International application number:
PCT/JP2006/001349

(87) International publication number:
WO 2006/080457 (03.08.2006 Gazette 2006/31)

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 28.01.2005 JP 2005021629

(71) Applicants:
• **Anritsu Corporation**
**Atsugi-shi**
**Kanagawa 243-8555 (JP)**
• **MATSUSHITA ELECTRIC INDUSTRIAL CO., LTD.**
**Osaka 571-8501 (JP)**

(72) Inventors:
• **TESHIROGI, Tasuku**
**ANRITSU Corporation**
**Kanagawa (JP)**

• **UCHINO, Masaharu**
**ANRITSU Corporation**
**Kanagawa (JP)**
• **SAITO, Sumio**
**ANRITSU Corporation**
**Kanagawa (JP)**
• **EJIMA, Masanori**
**ANRITSU Corporation**
**Kanagawa (JP)**

(74) Representative: **Pautex Schneider, Nicole**
**Véronique et al**
**Novagraaf International SA**
**25, Avenue du Pailly**
**1220 Les Avanchets - Geneva (CH)**

(54) **SHORT PULSE RADAR AND CONTROL METHOD THEREOF**

(57)   A pair pulse generator generates one pair of pulses including a first pulse having a predetermined width and a second pulse having a width equal to that of the first pulse and being behind from the first pulse by preset time each time a transmission designation signal is received. A burst oscillator performs an oscillation operation in a period in which one pair of pulses are input to output a signal having a predetermined carrier frequency as a first burst wave in synchronism with the first pulse and also output the signal of the predetermined carrier frequency as a second burst wave in synchronism with the second pulse, and stops the oscillation operation in a period in which one pair of pulses are not input. A transmitting unit emits the first burst wave into an exploration target space as a short pulse wave. A receiving unit receives a reflected wave and detects the second burst wave as a local signal. A control unit variably controls an interval between the first pulse and the second pulse.

EP 1 736 795 A1

FIG.1

**Description**

Technical Field

The present invention relates to short range radars and a method of controlling the same, and more particularly, to, of short range radars which emit a pulse wave having a short width (short pulse wave) into space at a predetermined frequency, receives and detects a reflected wave from an object existing in the space, and analyzes the object existing in the space based on the detection output, a short range radar to be used in an ultra-wide band (UWB) ranging from 22 to 29 GHz allocated to automotive radars or radars for people with visual impairment, the short range radar employing a technique to make it possible to cause a short range radar to correctly conform to the rules of International Radio Communication Regulations (RR), and a method of controlling the same.

Background Art

A short range radar using a UWB is tried to be practically used as an automotive short range radar or a radar for people with visual impairment.
A short range radar using a UWB, like a normal radar, emits a short pulse wave from an antenna of a transmitting unit into space and receives a reflected wave from an object existing in space to perform an analyzing process for the object.

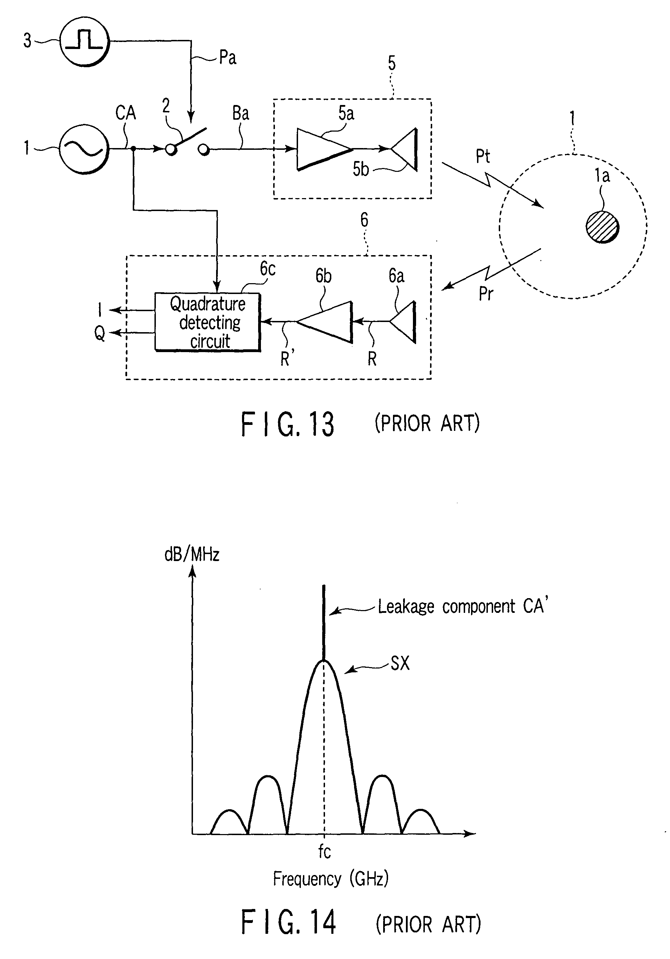

FIG. 13 shows a block diagram showing a main configuration of a short range radar of this type.
More specifically, in the short range radar, a carrier signal CA having a predetermined frequency falling within a UWB, the carrier signal CA being output from the carrier signal generator 1, is input to a switch circuit 2.
The switch circuit 2 is turned on or off by a pulse signal Pa output from a pulse generator 3 at a predetermined frequency to generate a burst wave Ba.
The burst wave Ba is amplified by an amplifier 5a of a transmitting unit 5 and then emitted from an antenna 5b into an exploration target space 1 as a short pulse wave Pt.
A reflected wave Pr from the object 1a receiving the short pulse wave Pt is received by an antenna 6a of a receiving unit 6. Then, a reception signal R is amplified by an amplifier 6b.
An amplified reception signal R' is input to a quadrature detecting circuit 6c.
The quadrature detecting circuit 6c quadrature-detects the reception signal R' by using a carrier signal S output from the carrier signal generator 1 as a local signal, and outputs baseband components I and Q of the quadrature detection.
The intensity of the reception signal R is calculated by a signal processing unit or the like (not shown) based on the baseband components I and Q. In addition, object information such as a size and a distance of the object 1a existing in the exploration target space 1 is calculated based on time from a timing at which the pulse signal Pa is output from the pulse generator 3 to when an amplitude having a predetermined level or higher is detected, the intensity of the pulse signal Pa, and the like.

Disclosure of Invention

However, as in the conventional short range radar, in the configuration in which the switch circuit 2 set in the path for the carrier signal CA is turn on or off to generate the burst wave Ba, the following problem is posed. That is, leakage occurs due to incomplete isolation of the switch circuit 2, and outputting of the carrier signal cannot be completely stopped.
In particular, in the UWB having a high frequency, it is difficult to prevent carrier leakage, and pulse-off time is several thousands times pulse-on time in a short range radar using a UWB. For this reason, the carrier leakage power becomes very high. As a result, as for a spectrum density Sx of the short pulse Pt, a leakage component CA' considerably outstands at a position corresponding to a carrier frequency fc, as shown in, for example, FIG. 14.
This leakage component CA' restricts a substantial receiving sensitivity of a reflected wave to a short pulse wave output at a normal transmission timing, so that a radar search range is narrowed, making it difficult to detect a low-reflectance obstacle.
With respect to the UWB radar system, the FCC (Federal Communications Commission of USA) regulates a spectrum mask shown in FIG. 15 in the following Non-patent Document 1.
Non-patent Document: FCC 04-285 "SECOND REPORT AND ORDER AND SECOND MEMORANDAM OPINION AND ORDER"
This spectrum mask is disclosed on December 16th, 2004. The spectrum mask is regulated accurately more than a previous spectrum mask.
In the spectrum mask, in a UWB, power densities in a range of 1.61 to 23.12 GHz and a range of 29.0 GHz or more are regulated to -61.3 dBm/MHz or less, and power densities in a range of 23.12 to 23.6 GHz and a range of 24.0 to 29.0 GHz are regulated to -41.3 dBm/MHz or less.

In order to protect a passive sensor for radio astronomy or exploration satellite service (EESS), the power density is suppressed to -61.3 dBm/MHz which is lower than a conventional level by 20 dB in a so-called RR radiowave emission prohibited band ranging from 23.6 to 24.0 GHz in which radiowave emission is intentionally prohibited by International Radio Communication Regulations (RR).

The radiation power density in the band is restricted. For this reason, when the leakage component S' is large as described above, an output level at the normal transmission timing must be set to be low accordingly, and an exploration distance or the like must be considerably restricted.

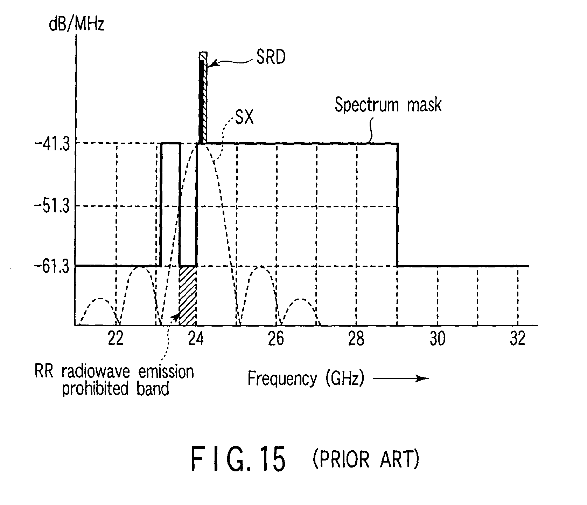

Therefore, as shown in FIG. 15, in the UWB, a carrier frequency of the short pulse Pt may be matched with a narrow band (short range device [SRD]) ranging from 24.05 to 24.25 GHz for a doppler radar which is allowed to emit a power at a density of higher than -41.3 dBm/MHz to avoid a problem caused by the leakage component CA'.

However, the RR radiowave emission prohibited band is present near the SRD, and, furthermore, a pulse modulation signal obtained by intermitting a carrier signal by a pulse signal as described above has a spectrum width of several 100 MHz to 2 GHz. For this reason, when a carrier frequency is set in the SRD band near the RR radiowave emission prohibited band, a part having a considerably high level of the short pulse spectrum overlaps the RR radiowave emission prohibited band. Consequently, it is very difficult to suppress the power density to -61.3 dBm or less unlike in the latest spectrum mask described above.

Against such a background, the present inventors proposed a UWB radar using a so-called burst oscillator which oscillates in only an on state of a pulse based on a transmission designation signal and stops oscillation in an off state of the pulse by the following Patent Document 1.

Patent Document 1: WO 2005/117256 (December 8th, 2005) Title of the Invention: OSCILLATOR FOR RADAR WHICH MAKES IT POSSIBLE TO PREVENT LEAKAGE OF OSCILLATION OUTPUT

Since carrier leakage does not theoretically occur in the burst oscillator for use in the radar oscillator, an arbitrary spectrum arrangement can be set. A main part of the spectrum is arranged sufficiently separately from the RR radiowave prohibited band to make it possible to sufficiently suppress interference with an earth exploration satellite or the like to the low levels.

Furthermore, the present inventors proposed a UWB radar which uses both a burst oscillator and a transmitting antenna having a notch of a gain in an RR radiowave prohibited band to make it possible to easily make a radiation power density lower than a spectral peak by 20 dB or more in the RR radiowave prohibited band by the following Patent Document 2.

Patent Document 2: PCT/JP2005/020859 (November 14th, 2005), Title of the Invention: CIRCULAR POLARIZING ANTENNA AND RADAR DEVICE USING THE SAME

In the UWB radar applied as a radar device, a square detector is used as a detecting circuit to make a configuration of a receiving system easy.

However, the square detector generally has a narrow dynamic range and cannot easily perform high sensitive detection. For this reason, a receiving sensitivity must be disadvantageously corrected by using a low-noise amplifier (LNA) the gain of which is variable in a receiving system.

In order to solve the problems of the prior art described above, it is an object of the present invention to provide a short range radar comprising: a transmitting system which generates one pair of pulses including a first pulse having a predetermined width and a second pulse having a width equal to that of the first pulse and being behind by predetermined time each time a transmission designation signal is received and which emits a short pulse wave of a burst wave into a space based on the first pulse serving as a first generated pulse of the pair of pulses to prevent interference with the RR radiowave prohibited band while conforming to a spectrum mask regulated as a UWB radar; and a receiving system which performs quadrature detection by using the second pulse serving as a second generated pulse of the pair of pulses to make it possible to perform highly sensitive detection with a wide dynamic range, and a method of controlling the short range radar.

In order to achieve the above object, according to a first aspect of the present invention, there is provided a short range radar comprising:

a pair pulse generator (21) which generates one pair of pulses including a first pulse (Pa) having a predetermined width and a second pulse (Pb) having a width equal to that of the first pulse and being behind from the first pulse by preset time (Td) each time the pair pulse generator receives a transmission designation signal (S);
a burst oscillator (22) which performs an oscillation operation in a period in which one pair of pulses including the first and second pulses output from the pair pulse generator are received to output a signal having a predetermined carrier frequency as a first burst wave (Ba) in synchronism with the first pulse and also output the signal of the predetermined carrier frequency as a second burst wave (Bb) in synchronism with the second pulse, and which stops the oscillation operation in a period in which one pair of pulses including the first and second pulses are not input;
a transmitting unit (25) which emits the first burst wave output in synchronism with the first pulse from the burst oscillator into an exploration target space (1) as a short pulse wave (Pt);

a receiving unit (30) which receives a reflected wave of the first burst wave emitted from the transmitting unit into the exploration target space and detects the received signal by using a second burst wave output from the burst oscillator in synchronism with the second pulse as a local signal; and

a control unit (50) which outputs the transmission designation signal to the pair pulse generator and variably controls an interval between the first pulse and the second pulse output from the pair pulse generator.

In order to achieve the above object, according to a second aspect of the present invention, there is provided the short range radar according to the first aspect, wherein,

the receiving unit quadrature-detects the received signal by using the second burst wave as a local signal.

In order to achieve the above object, according to a third aspect of the present invention, there is provided the short range radar according to the first aspect, further comprising:

a switch (23) which is arranged between the burst oscillator and the transmitting unit and between the burst oscillator and the receiving unit to selectively input the first or second burst wave output from the burst oscillator to any one of the transmitting unit and the receiving unit; and

a switching circuit (24) which controls the switch to input the first burst wave output from the burst oscillator to the transmitting unit and to input the second burst wave to the receiving unit.

In order to achieve the above object, according to a fourth aspect of the present invention, there is provided the short range radar according to the first aspect, wherein

the transmitting unit has a fixed delay unit (25d) which gives fixed delay to the first burst wave output from the burst oscillator.

In order to achieve the above object, according to a fifth aspect of the present invention, there is provided the short range radar according to the first aspect, wherein

the pair pulse generator comprises:

a direct digital synthesizer (DDS: 21a) which receives a clock signal (C) having a predetermined frequency (fc) and frequency data (Df) having a predetermined number of bits L corresponding to the delay time from the control unit, sequentially reads waveform data such that address designation is performed by a value obtained by integrating the frequency data by a cycle of the clock signal to an inner read-only memory (ROM) having an address length (L) in which waveform data of one cycle of a sine wave is stored, and digital-to-analog-converts the waveform data to output a sinusoidal signal having a frequency (fe) determined by a predetermined frequency of the clock signal, the address length, and the frequency data;

a low-pass filter (LPF: 21b) which removes a high-frequency component of the sinusoidal signal output from the DDS to output a sine-wave signal;

a waveform shaping circuit (21c) which performs a waveform shaping process to the sine-wave signal output from the LPF, and outputs two phases of first and second variable cycle pulses (Pe, Pe') having a duty ratio of 50, inverted levels, a cycle (Te) corresponding to a frequency of the sinusoidal signal;

a first pulse generating circuit (21d) which receives the first variable cycle pulse output from the waveform shaping circuit and outputs a first pulse (Pa) having a predetermined width and synchronized with a timing at which a level of the first variable cycle pulse decays first after the transmission designation signal is input;

a second pulse generating circuit (21e) which receives the second variable cycle pulse output from the waveform shaping circuit and outputs a second pulse (Pa) having a predetermined width and synchronized with a timing at which a level of the second variable cycle pulse decays first after the transmission designation signal is input; and

an OR circuit (21f) which calculates a logical OR of the first pulse output from the first pulse generating circuit and the second pulse output from the second pulse generating circuit.

In order to achieve the above object, according to a sixth aspect of the present invention, there is provided the short range radar according to the first aspect, wherein

the burst oscillator is configured such that an output from an amplifier (22f) having a resonator (22e) as a load is positively fed back to an input side of the amplifier by a feedback circuit (22b) to be oscillated at a resonant frequency of the resonator, and is configured such that a circuit between an input terminal or an output terminal of the amplifier and a ground line is turned on or off by a switch circuit (22c) to switch the burst oscillator between an oscillation operation state and an oscillation stop state.

In order to achieve the above object, according to a seventh aspect of the present invention, there is provided the short range radar according to the first aspect, wherein

the burst oscillator is configured such that an output from an amplifier (22f) having a resonator (22e) as a load is positively fed back to an input side of the amplifier by a feedback circuit (22b) to be oscillated at a resonant frequency of the resonator, and is configured such that a switch circuit (22c) is connected to a power supply line of the amplifier to on/off-control power supply to the amplifier and to switch the burst oscillator between an oscillation operation state and an oscillation stop state.

In order to achieve the above object, according to an eighth aspect of the present invention, there is provided the short range radar according to the first aspect, wherein

the burst oscillator is configured such that an output from an amplifier (22f) having a resonator (22e) as a load is positively fed back to an input side of the amplifier by a feedback circuit (22b) to be oscillated at a resonant frequency of the resonator, and is configured such that a first switch circuit (22c) is connected to a power supply line of the amplifier to on/off-control power supply to the amplifier and to switch the burst oscillator between an oscillation operation state and an oscillation stop state, and, by using a second switch circuit (22g) which performs a reverse turning on/off operation of the operation of the first switch circuit, the second switch circuit is turned on in only a period in which the power supply to the amplifier is stopped by the first switch circuit to flow a predetermined current to the resonator, and the second switch circuit is turned off at a timing at which a power is supplied to the amplifier to cause the resonator to generate a signal component of a resonant frequency obtained by a transient phenomenon, so that the burst oscillator is rapidly shifted to the oscillation operation state.

In order to achieve the above object, according to a ninth aspect of the present invention, there is provided the short range radar according to the third aspect, wherein

the switch has a common contact and first and second contacts, and is constituted by a 1-circuit-2-contact type of switch which inputs the first burst wave to the transmitting unit through the common contact and the first contact and inputs the second burst wave to the receiving unit through the common contact and the second contact.

In order to achieve the above object, according to a tenth aspect of the present invention, there is provided the short range radar according to the third aspect, wherein

the switch is constituted by a first switch (23a) which inputs the first burst wave to the transmitting unit and a second switch (23b) which inputs the second burst wave to the receiving unit.

In order to achieve the above object, according to an eleventh aspect of the present invention, there is provided the short range radar according to tenth aspect, wherein

each of the first and second switches comprises:

first to fourth diodes (D1 to D4) which are bridge-connected to one another;
a fifth diode (D5) which is reversely inserted between a ground and a connection,point of two reversely connected first diodes (D1, D2) of the first to fourth diodes;
a sixth diode (D6) which is forwardly connected between the ground and a connection point of two reversely connected second diodes (D3, D4) of the first to fourth diodes; and
a current source (I) which is connected between the connection point of the two first diodes and reverse connection points of the two second diodes and has a current the direction of which is inverted depending on a level of a switching signal (Q) from the switching circuit, and
only when the direction of the current from the current source is a direction in which the fifth and sixth diodes are turned off and the first to fourth diodes are turned on, a first or second burst wave (Ba, Bb) input to a connection point of the first and third diodes is output from a connection point of the second and fourth diodes.

In order to achieve the above object, according to a twelfth aspect of the present invention, there is provided a method of controlling a short range radar, comprising:

a step of preparing a pair pulse generator (21), a burst oscillator (22), a receiving unit (30), a transmitting unit (25), and a control unit (50);
a step of causing the control unit (50) to output a transmission designation signal;
a step of causing the pair pulse generator (21) to generate one pair of pulses including a first pulse (Pa) having a predetermined width and a second pulse (Pb) having a width equal to that of the first pulse and being behind from the first pulse by preset time (Td) each time the transmission designation signal (S) from the control unit is received;
a step of causing the control unit (50) to variably control an interval between the first pulse and the second pulse output from the pair pulse generator;
a step of causing the burst oscillator (22) to perform an oscillation operation in a period in which one pair of pulses including the first and second pulses output from the pair pulse generator are received to output a signal having a predetermined carrier frequency as a first burst wave (Ba) in synchronism with the first pulse and also output the signal having the predetermined carrier frequency as a second burst wave (Bb) in synchronism with the second pulse and to stop the oscillation operation in a period in which one pair of pulses including the first and second pulses are not input;

a step of causing the transmitting unit (25) to emit the first burst wave output from the burst oscillator in synchronism with the first pulse into an exploration target space (1) as a short pulse wave (Pt); and

a step of causing the receiving unit (30) to receive a reflected wave of the short pulse wave obtained by the first burst wave emitted from the transmitting unit into the exploration target space and to detect the received signal by using a second burst wave output from the burst oscillator in synchronism with the second pulse as a local signal.

In order to achieve the above object, according to a thirteenth aspect of the present invention, there is provided the method of controlling a short range radar, according to the twelfth aspect, wherein
the step of detecting the received signal quadrature-detects the received signal by using the second burst wave as a local signal by means of receiving unit.

In order to achieve the above object, according to a fourteenth aspect of the present invention, there is provided the method of controlling a short range radar, according to the twelfth aspect, further comprising:

a step of preparing a switch (23) and a switching circuit (24);
a step of causing the switch (23) to selectively input the first and second burst waves output from the burst oscillator to any one of the transmitting unit and the receiving unit;
a step of causing the switching circuit (24) to control the switch to input the first burst wave output from the burst oscillator to the transmitting unit and to input the second burst wave to the receiving unit.

In order to achieve the above object, according to a fifteenth aspect of the present invention, there is provided the method of controlling a short range radar, according to the twelfth aspect, wherein
the transmitting unit is provided with a fixed delay unit (25d) which gives fixed delay to the first burst wave.

In order to achieve the above object, according to a sixteenth aspect of the present invention, there is provided the method of controlling a short range radar, according to the twelfth aspect, wherein
the pair pulse generator comprises:

a direct digital synthesizer (DDS: 21a) which receives a clock signal (C) having a predetermined frequency (fc) and frequency data (Df) having a predetermined number of bits L corresponding to the delay time from the control unit, sequentially reads waveform data such that address designation is performed by a value obtained by integrating the frequency data by a cycle of the clock signal to an inner read-only memory (ROM) having an address length (L) in which waveform data of one cycle of a sine wave is stored, and digital/analog-converts the waveform data to output a sinusoidal signal having a frequency (fe) determined by a predetermined frequency of the clock signal, the address length, and the frequency data;
a low-pass filter (LPF: 21b) which removes a high-frequency component of the sinusoidal signal output from the DDS to output a sine-wave signal;
a waveform shaping circuit (21c) which performs a waveform shaping process to the sine-wave signal output from the LPF, and outputs two phases of first and second variable cycle pulses (Pe, Pe') having a duty ratio of 50, inverted levels, a cycle (Te) corresponding to a frequency of the sinusoidal signal;
a first pulse generating circuit (21d) which receives the first variable cycle pulse output from the waveform shaping circuit and outputs a first pulse (Pa) having a predetermined width and synchronized with a timing at which a level of the first variable cycle pulse decays first after the transmission designation signal is input;
a second pulse generating circuit (21e) which receives the second variable cycle pulse output from the waveform shaping circuit and outputs a second pulse (Pa) having a predetermined width and synchronized with a timing at which a level of the second variable cycle pulse decays first after the transmission designation signal is input; and
an OR circuit (21f) which calculates a logical OR of the first pulse output from the first pulse generating circuit and the second pulse output from the second pulse generating circuit.

In order to achieve the above object, according to a seventeenth aspect of the present invention, there is provided the method of controlling a short range radar, according to the twelfth aspect, wherein
the burst oscillator is configured such that an output from an amplifier (22f) having a resonator (22e) as a load is positively fed back to an input side of the amplifier by a feedback circuit (22b) to be oscillated at a resonant frequency of the resonator, and is configured such that a circuit between an input terminal or an output terminal of the amplifier and a ground line is turned on or off by a switch circuit (22c) to switch the burst oscillator between an oscillation operation state and an oscillation stop state.

In order to achieve the above object, according to an eighteenth aspect of the present invention, there is provided the method of controlling a short range radar, according to the twelfth aspect, wherein
the burst oscillator is configured such that an output from an amplifier (22f) having a resonator (22e) as a load is positively fed back to an input side of the amplifier by a feedback circuit (22b) to be oscillated at a resonant frequency of the resonator, and is configured such that a switch circuit (22c) is connected to a power supply line of the amplifier to on/off-control power supply to the amplifier and to switch the burst oscillator between an oscillation operation state and an oscillation stop state.

In order to achieve the above object, according to a nineteenth aspect of the present invention, there is provided the method of controlling a short range radar, according to the twelfth aspect, wherein
the burst oscillator is configured such that an output from an amplifier (22f) having a resonator (22e) as a load is positively fed back to an input side of the amplifier by a feedback circuit (22b) to be oscillated at a resonant frequency of the resonator, and is configured such that a first switch circuit (22c) is connected to a power supply line of the amplifier to on/off-control power supply to the amplifier and to switch the burst oscillator between an oscillation operation state and an oscillation stop state, and, by using a second switch circuit (22g) which performs a reverse turning on/off operation of the operation of the first switch circuit, the second switch circuit is turned on in only a period in which the power supply to the amplifier is stopped by the first switch circuit to flow a predetermined current to the resonator, and the second switch circuit is turned off at a timing at which a power is supplied to the amplifier to cause the resonator to generate a signal component of a resonant frequency obtained by a transient phenomenon, so that the burst oscillator is rapidly shifted to the oscillation operation state.

In the short range radar and the method of controlling the same according to the present invention having the above configuration, one pair of pulses including a first pulse and a second pulse being behind from the first pulse by predetermined time are input, a first burst wave oscillation-output from the burst oscillator in synchronism with the first pulse is emitted from the transmitting unit into an exploration target space by switching, the reflected wave is received by the receiving unit, and the received signal is detected by using a second burst wave oscillation-output from the burst oscillator in synchronism with the second pulse as a local signal.

In the short range radar and the method of controlling the same according to the present invention, a so-called linear detecting scheme is used as a detecting scheme, and therefore, receiving can be performed at a sensitivity higher than that of a square detecting scheme and with a dynamic range wider than that of the square detecting scheme.

The short range radar and the method of controlling the same according to the present invention employ the configuration in which the first burst wave output from the burst oscillator and the second burst wave are input to the transmitting unit by the switch and the receiving unit by the switch, respectively. For this reason, the second burst wave can be prevented from being emitted into an exploration target space. Furthermore, output powers of the first and second burst waves can be minimized, and low power consumption can be achieved.

The short range radar and the method of controlling the same according to the present invention employ the configuration in which the first burst wave output from the switch is delayed by predetermined time by means of a fixed delay unit. Consequently, even though a time difference between the first and second burst waves is not made very short, a close-range target can be detected.

More specifically, when the time difference between the first and second burst waves is short, an oscillation frequency and a waveform of the second burst wave are disadvantageously different from those of the first burst wave due to transient characteristics of the burst oscillator or heat generated by the burst oscillator.

However, as the configuration in which the first burst wave is delayed by the predetermined time by means of the fixed delay unit, the time difference between the first and second burst waves is fixed, making it possible to avoid the above problems.

Brief Description of Drawings

FIG. 1 is a block diagram shown to explain a configuration of a short range radar according to a first embodiment of the present invention.
FIG. 2 is a timing chart shown to explain an operation of a main part in FIG. 1.
FIG. 3 is a block diagram showing an exemplary configuration of the main part in FIG. 1.
FIG. 4 is a timing chart shown to explain an operation of the exemplary configuration in FIG. 3.
FIG. 5 is a block diagram showing an exemplary configuration of the main part in FIG. 1.
FIG. 6 is a block diagram showing another exemplary configuration of the main part in FIG. 1.
FIG. 7 is a block diagram showing still another exemplary configuration of the main part in FIG. 1.
FIG. 8 is a block diagram showing still another exemplary configuration of the main part in FIG. 1.
FIG. 9 is a diagram showing a concrete circuit example of the exemplary configuration in FIG. 8.
FIG. 10 is a characteristic diagram showing comparison of a dynamic range of a linear detecting scheme employed by the present invention with a dynamic range of a square detecting scheme according to a prior art.
FIG. 11 is a timing chart shown to explain an operation in FIG. 1.
FIG. 12 is a block diagram shown to explain a configuration of a short range radar according to a second embodiment of the present invention.

FIG. 13 is a block diagram showing an exemplary configuration of a conventional short range radar apparatus.

FIG. 14 is a spectrum characteristic diagram shown to explain an operation of the conventional short range radar apparatus.

FIG. 15 is a diagram showing a spectrum mask complying with the FCC's recommendation in a UWB.

Best Mode for Carrying Out the Invention

Several embodiments of the present invention will be described below with reference to the accompanying drawings.

(First Embodiment)

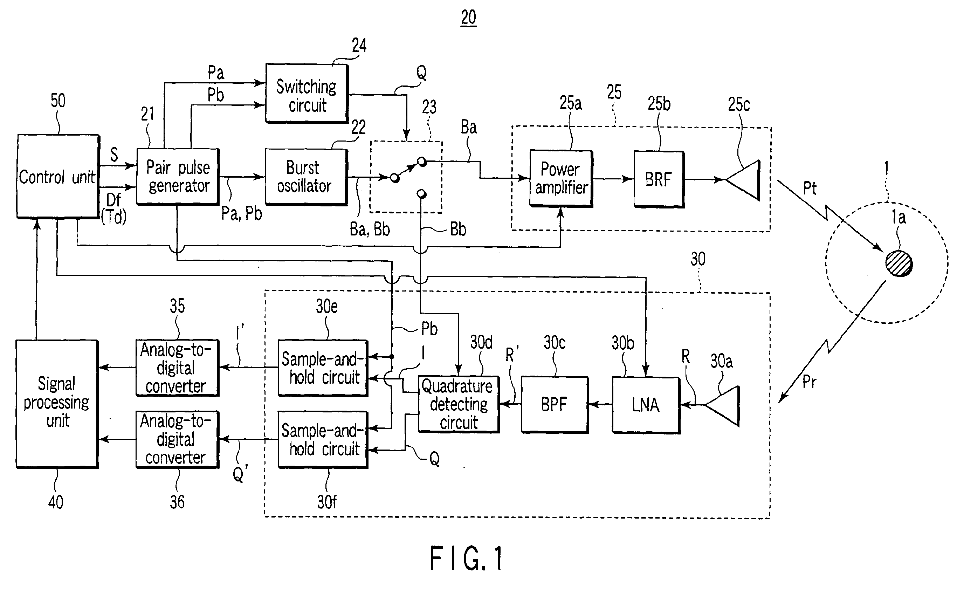

FIG. 1 is a block diagram shown to explain a configuration of a short range radar according to a first embodiment of the present invention.

A short range radar 20 according to the present invention basically includes: a pair pulse generator 21 which generates one pair of pulses including a pulse signal Pa having a predetermined width and a second pulse Pb having a width equal to that of the first pulse and being behind from the first pulse by preset time Td each time the pair pulse generator 21 receives a transmission designation signal S; a burst oscillator 22 which performs an oscillation operation in a period in which one pair of pulses including the first and second pulses Pa and Pb output from the pair pulse generator 21 are received to output a signal having a predetermined carrier frequency as a first burst wave Ba in synchronism with the pulse signal Pa and also output the signal of the predetermined carrier frequency as a second burst wave Bb in synchronism with the second pulse Pb, and which stops the oscillation operation in a period in which one pair of pulses including the first and second pulses Pa and Pb are not input; a transmitting unit 25 which emits the first burst wave Ba output in synchronism with the first pulse Pa from the burst oscillator 22 into an exploration target space 1 as a short pulse wave Pt; a receiving unit 30 which receives a reflected wave Pr of a short pulse wave generated by the first burst wave Ba emitted from the transmitting unit 25 into the exploration target space 1 and detects the received signal R by using a second burst wave Bb output from the burst oscillator 22 in synchronism with the second pulse Pb as a local signal; and a control unit 50 which outputs the transmission designation signal S to the pair pulse generator 21 and variably controls an interval between the first pulse Pa and the second pulse Pb output from the pair pulse generator 21.

A method of controlling a short range radar according to the present invention basically includes: a step of preparing a pair pulse generator 21, a burst oscillator 22, a receiving unit 30, and a control unit 50; a step of causing the control unit 50 to output a transmission designation signal S; a step of causing the pair pulse generator 21 to generate one pair of pulses including a first pulse Pa having a predetermined width and a second pulse Pb having a width equal to that of the first pulse Pa and being behind from the first pulse by preset time Td each time the transmission designation signal S from the control unit 50 is received; a step of causing the control unit 50 to variably control an interval between the first pulse Pa and the second pulse Pb output from the pair pulse generator 21; a step of causing the burst oscillator 22 to perform an oscillation operation in a period in which one pair of pulses including the first and second pulses Pa and Pb output from the pair pulse generator 21 are received to output a signal having a predetermined carrier frequency as a first burst wave Ba in synchronism with the first pulse Pa and output the signal having the predetermined carrier frequency as a second burst wave Bb in synchronism with the second pulse Pb and to stop the oscillation operation in a period in which one pair of pulses including the first and second pulses Pa and Pb are not input; a step of causing the transmitting unit 25 to emit the first burst wave Ba output from the burst oscillator 22 in synchronism with the first pulse Pa into the exploration target space 1 as a short pulse wave Pt; and a step of causing the receiving unit 30 to receive a reflected wave Pr of the short pulse wave Pt obtained by the first burst wave Ba emitted from the transmitting unit 25 into the exploration target space 1 and to detect the received signal R by using a second burst wave Bb output from the burst oscillator 22 in synchronism with the second pulse Pb as a local signal.

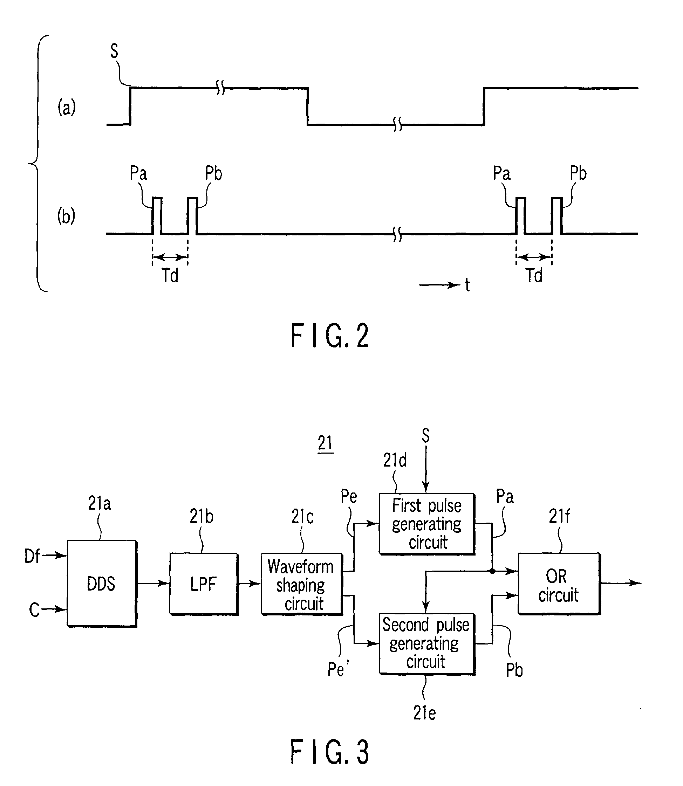

More specifically, as shown in FIG. 1, the pair pulse generator 21 of the short range radar 20 outputs, as one pair of pulses, a first pulse Pa having a predetermined width (for example, 1 ns) and a second pulse Pb having a width equal to that of the first pulse Pa and being behind by preset time Td as shown in (b) of FIG. 2 each time a signal S which is supplied from a control unit 50 (to be described later) and which designates transmission at a rising edge as shown in (a) of FIG. 2.

The pair pulse generator 21 has, for example, a configuration shown in FIG. 3 to give correct delay time Td between the first pulse Pa and the second pulse Pb.

In FIG. 3, a direct digital synthesizer (DDS) 21a receives a clock signal C having a predetermined frequency fc (for example, 200 MHz) and frequency data Df having a predetermined number of bits L corresponding to delay time Td from the control unit 50 (to be described later), sequentially reads waveform data such that address designation by a value obtained by integrating the frequency data Df by a clock frequency to a read-only memory (ROM) which stores waveform data of one cycle of a sine wave and having an address length L, digital-to-analog (D/A) converts the waveform data, and a sinusoidal (more appropriately, a waveform changing in the form of steps along a sine wave) signal having a frequency fe determined by the frequency fc of the clock signal C, the address length L and the frequency data Df to a low-pass filter (LPF) 21b.

The LPF 21b removes a high-frequency component (for example, a component having 71 MH or more) of a digital-to-analog converted output from the DDS 21a to generate a sine-wave signal, and outputs the signal to a waveform shaping circuit 21c.

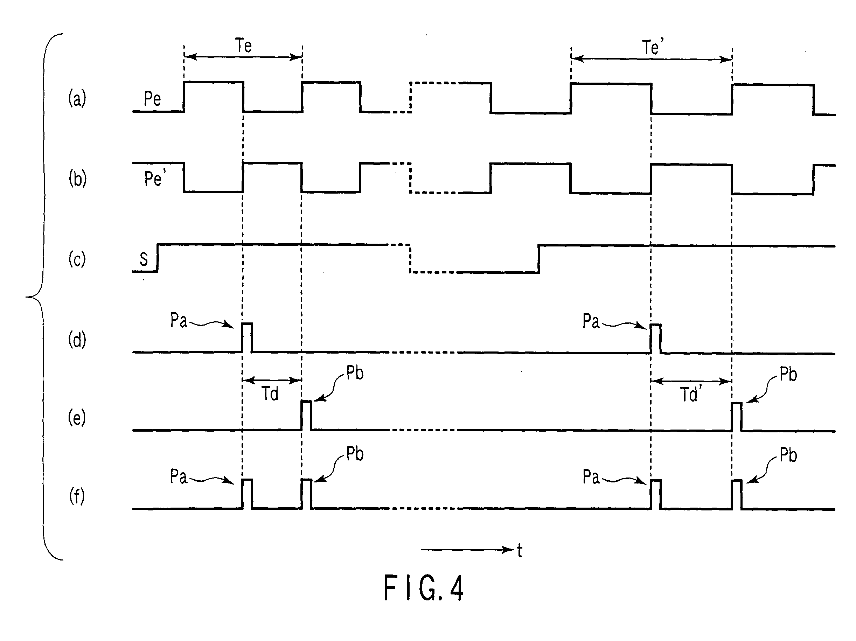

The waveform shaping circuit 21c performs a waveform shaping process to a sine-wave signal from the LPF 21b, and outputs two phases of first and second variable cycle pulses Pe and Pe' having a duty ratio of 50, inverted levels, a frequency fe (cycle Te), as shown in (a) and (b) of FIG. 4.

The frequency fe of the first and second variable cycle pulses Pe and Pe' is given by the following equation in a range which is 1/2 or less the frequency fc of the clock signal C:

$$\mathtt{fe = Df \cdot fc / 2^{L}}$$

The cycle Te of the first and second variable cycle pulses Pe and Pe' is given by the following equation in a range which is twice or more the cycle Tc of the frequency fc of the clock signal C:

$$\mathtt{Te = Tc \cdot 2^{L} / Df}$$

In this case, a variation $\Delta T$ (time resolution) of the cycle Te of the first and second variable cycle pulses Pe and Pe' when the value of the frequency data Df varies from A to A+1 by one point can be expressed by the following equations:

$$\mathtt{\Delta T = (Tc \cdot 2^{L}) \{1/A) - [1/(A + 1)]\}}$$
$$\mathtt{= (Tc \cdot 2^{L}) \{1/[A(A + 1)]\}}$$

When A is sufficiently larger than 1 in the above equations, the following equation is satisfied:

$$\mathtt{\Delta T = (Tc \cdot 2^{L}) (1/A^{2})}$$

For example, when Tc = 5 ns, $2^{L} = 2^{32}$ is given by an approximate value of $4 \times 10^{9}$, and A = $1 \times 10^{6}$, the following equation is satisfied:

$$\mathtt{\Delta T = 20/(1 \times 10^{12}) = 0.02 \ (ns).}$$

More specifically, in the first and second variable cycle pulses Pe and Pe', the frequency data Df has a time resolution of 0.02 ns at about $1 \times 10^{6}$.

When A = $10 \times 10^{6}$, the value is 0.2 ps.

In these data setting ranges, variable cycles of the first and second variable cycle pulses Pe and Pe' can obtain a time resolution sufficiently smaller than a width (1 ns) of the short pulse wave Pt, and the cycle can be almost continuously made variable.

The first variable cycle pulse Pe is input to a first pulse generating circuit 21d, and the second variable cycle pulse Pe' is input to a second pulse generating circuit 21e.

The first pulse generating circuit 21d generates, as shown in (d) of FIG. 4, a first pulse Pa having a predetermined width (1 nS) and synchronized with a timing at which the level of the first variable cycle pulse Pe decays first after the transmission designation signal S shown in (c) of FIG. 4 is input, and outputs the first pulse Pa to an OR circuit 21f.

The second pulse generating circuit 21e generates, as shown in (e) of FIG. 4, a second pulse Pb having a predetermined width (1 ns) and synchronized with a timing at which the level of the second variable cycle pulse Pe' decays first after the first pulse Pa is output from the first pulse generating circuit 21d, and outputs the second pulse Pb to the OR circuit 21f.

Therefore, from the OR circuit 21f which calculates an OR of the first pulse Pa and the second pulse Pb, the first pulse Pa is output, and then, the second pulse Pb being behind by Td = Te/2 is output, as shown in (f) of FIG. 4.

In this manner, as shown in (a) to (e) of FIG. 4, the delay time Td of the second pulse with respect to the first pulse Pa can be elongated to Td' when the cycle Te of the first variable cycle pulse Pe is increased to Te'.

In this case, the delay time Td = Te/2 is very stable depending on a frequency accuracy of the clock signal C, and as described above, the variable cycles of the first and second variable cycle pulses Pe and Pe' can be finely changed.

As a consequence, the delay time Td between the two pulses Pa and Pb generated by the pair pulse generator 21 can be stably made variable at high resolution.

In this manner, the pair of pulses generated by the pair pulse generator 21 are input to the burst oscillator 22.

The burst oscillator 22 is configured to perform oscillation operation to output a signal having a predetermined carrier frequency in a period in which the two pulses Pa and Pb output from the pair pulse generator 21 are received and to stop the oscillation operation in a period in which the two pulses Pa and Pb are not input.

As the burst oscillator 22, various configurations can be conceived.

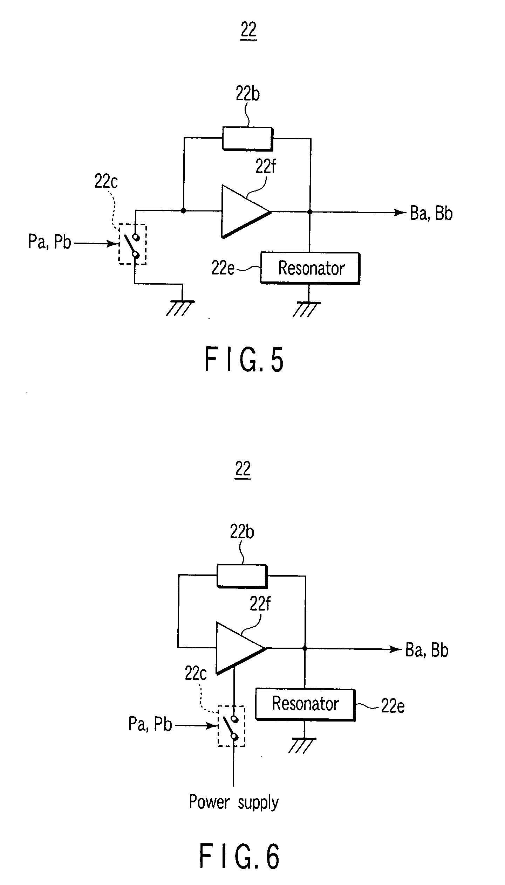

For example, FIG. 5 shows an exemplary configuration of the burst oscillator 22 using a resonator.

The burst oscillator 22 is configured to positively feed back an output from an amplifier 22f using a resonator 22e as a load to an input side of the amplifier 22f by a feedback circuit 22b to perform oscillation at a resonant frequency of the resonator 22e.

The feedback circuit 22b, for example, is constituted by an LPF such as an L-type LPF or a T-type LPF constituted by a resistor (or coil) and a capacitor.

In this case, a circuit between an input terminal or an output terminal of the amplifier 22f and a ground line is turned on or off by a switch circuit 22c to cause the burst oscillator 22 to perform a switching operation between an oscillation operation state and an oscillation stop state.

The switch circuit 22c is inserted to turn on or off a circuit between the input terminal (or output terminal) of the amplifier 22f and the ground line. The switch circuit 22c is turned off when the pulses Pa and Pb are at a high level(pulse input state) to set the burst oscillator 22 in the oscillation operation state. When the pulses Pa and Pb are at a low level (pulse non-input state), the switch circuit 22c is turned on to set the burst oscillator 22 in the oscillation stop state.

In the same way, while the switch circuit 22c is turned off, the above operations are repeated. A burst wave having a resonant frequency of the resonator 22e is oscillation-output from the burst oscillator 22. When the switch circuit 22c is turned on, the oscillation operation is stopped.

In this case, the resonant frequency of the resonator 22e is set such that the oscillation frequency of the burst oscillator 22 is, for example, 26.5 GHz.

Since the oscillation operation itself of the burst oscillator 22 is controlled by the pulses Pa and Pb, carrier leakage does not theoretically occur.

Therefore, a power density regulated in use of a UWB may be limited in consideration of only an instantaneous power of a short pulse wave output in oscillation, and the regulated power can be maximally effectively used.

A main lobe can be arranged at an arbitrary position of a UWB spectrum mask because carrier leakage does not occur. Almost an entire main lobe can be prevented from overlapping an RR radiowave prohibited band.

As in the burst oscillator 22 shown in FIG. 6, the switch circuit 22c is connected to a power supply line of the amplifier 22f to regulate a power supply (including a bias power supply) to the amplifier 22f, so that the oscillation operation can be stopped.

In a configuration in which the power supply to the amplifier 22f is controlled to generate a burst wave, the oscillation operation may not be started immediately after the power is supplied.

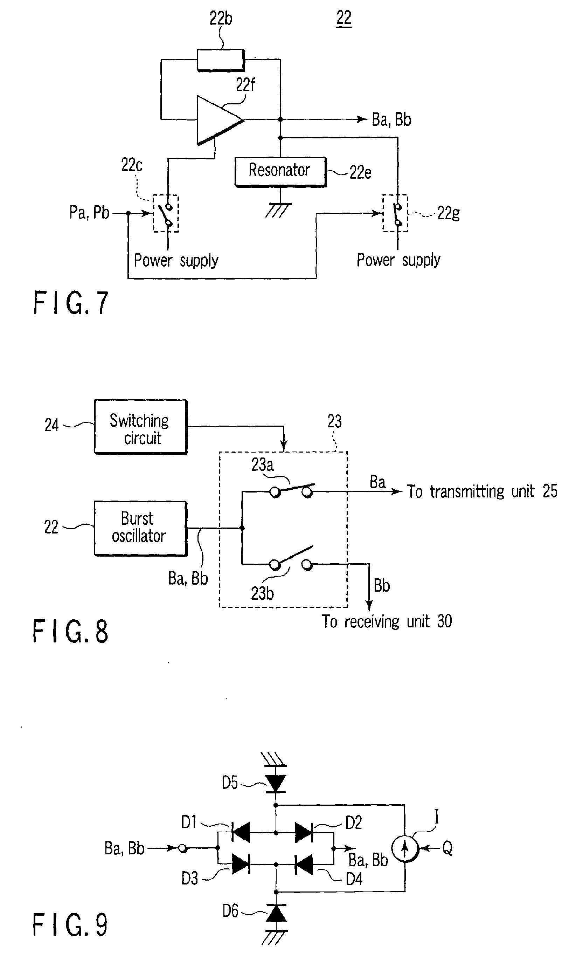

In this case, as in the burst oscillator 22 shown in FIG. 7, a switch circuit 22g which performs a reverse operation of the operation of the switch circuit 22c is used to turn on the switch circuit 22g in a period in which a power supply to the amplifier 22f is stopped to flow a predetermined current to the resonator 22e. The switch circuit 22g is turned off at a timing at which the switch circuit 22c is turned on to supply the power, so that the resonator 22e is caused to generate a signal component of a resonant frequency by a transient phenomenon to make it possible to rapidly shift the burst oscillator 22 to the oscillation state.

In this case, the switch circuit 22c and the switch circuit 22g perform the reverse turning on/off operations to make the explanation easy. However, since the oscillation activation uses a transient phenomenon occurring in the resonator 22e when the switch circuit 22g is turned off, a power supply to the resonator 22e by the switch circuit 22g may be performed in only a predetermined period of time immediately before the power supply by the switch circuit 22c is started.

In the resonant burst oscillators 22, the resonator 22e may be constituted not only an LC-type resonator but also a transmission-line type (for example, λ/4 type) resonator.

Returning to FIG. 1, the burst waves Ba and Bb output from the burst oscillator 22 are input to a switch 23.

The switch 23 is to distribute the burst waves Ba and Bb output from the burst oscillator 22 into the transmitting unit 25 and the receiving unit 30. By using a switching circuit 24, the first burst wave Ba output from the burst oscillator 22 in synchronism with the first pulse Pa is input to the transmitting unit 25, and the second burst wave Bb output in synchronism with the second pulse Pb is input to the receiving unit 30.

In this case, the switch 23 may be constituted by not only the 1-circuit-2-contact type of switch as shown in FIG. 1, but also two first and second on/off-type (2-circuit-2-contact) switches 23a and 23b to independently input the first burst wave Ba and the second burst wave Bb to the transmitting unit 25 and the receiving unit 30, respectively.

In FIG. 1, the switching circuit 24 is a circuit which performs switching control of the switch 23. For example, the switching circuit 24 connects the switch 23 to the receiving unit 30 side when the first pulse Pa output from the first pulse generating circuit 21d of the pair pulse generator 21 decays, and the switching circuit 24 connects the switch 23 to the transmitting unit 25 side when the second pulse Pb output from the second pulse generating circuit 21e decays.

FIG. 9 is an example showing only one of the circuits which can be used as first and second switches 23a and 23b.

Each of the first and second switches 23a and 23b includes: first to fourth diodes D1 to D4 which are bridge-connected to one another; a fifth diode D5 reversely inserted between a ground and a connection point of the two reversely connected first diodes D1 and D2 of the first to fourth diodes; a sixth diode D6 forwardly connected between the ground and a connection point of the two second diodes D3 and D4 of the first to fourth diodes D1 to D4; and a current source I connected between the connection point of the two first diodes D1 and D2 and reverse connection points of the two second diodes D3 and D4 and having a current the direction of which is inverted depending on a level of a switching signal Q from the switching circuit 24. The first and second switches 23a and 23b are configured such that a first or second burst wave Ba or Bb input to the connection point of the first and third diodes D1 and D3 is output from a connection point of the second and fourth diodes D2 and D4 only when the direction of the current from the current source I is a direction in which the fifth and sixth diodes D5 and D6 are turned off and the first to fourth diodes D1 to D4 are turned on.

More specifically, in the first and second switches 23a and 23b, the diodes D5 and D6 are turned off and the diodes D1 to D4 are turned on when the current source I flows a current in a direction in FIG. 9, so that the first or second burst wave Ba or Bb input to the connection point of the diodes D1 and D3 are output from the connection point of the diodes D2 and D4.

When the current source I flows a current in a reverse direction of the direction shown in FIG. 9, the diodes D5 and D6 are turned on, and the diodes D1 to D4 are turned off, so that the first or second burst wave Ba or Bb input to the connection point of the diodes D1 and D3 is not transmitted to the connection point of the diodes D2 and D4.

The on/off ratio at 26 GHz in the first and second switches 23a and 23b having the above configuration is about 35 dB.

In the circuits of the first and second switches 23a and 23b, diodes each formed by short-circuiting a base and a collector of an npn transistor may also be used in place of the diodes.

In this case, since an on resistance of a switching element can be reduced, the on/off ratio at 26 GHz is about 51 dB.

Returning to FIG. 1, the transmitting unit 25 causes a power amplifier 25a to amplify, the first burst wave Ba input through the switch 23 into a regulated power, causes a band regulation filter (BRF) 25b to remove an unnecessary component such as an RR radiowave prohibited band, and emits the resultant wave from an antenna 25c into the exploration target space 1 as a short pulse wave Pt.

The receiving unit 30 receives a reflected wave Pr of the short pulse wave Pt emitted into the exploration target space 1 through an antenna 30a, causes a low-noise amplifier (LNA) 30b to amplify the reception signal R, and then causes a band pass filter (BPF) 30c having a band width of about 2 GHz to limits the band, so that the band-limited reception signal R' is input to a quadrature detecting circuit 30d.

Degrees of amplification of the power amplifier 25a and the LNA 30b can be varied by a control unit 50 (will be described later).

The quadrature detecting circuit 30d quadrature-detects the reception signal R' by using the second burst wave Bb input through the switch 23 as a local signal, and two quadrature baseband components I and Q are input to sample-and-hold circuits 30e and 30f.

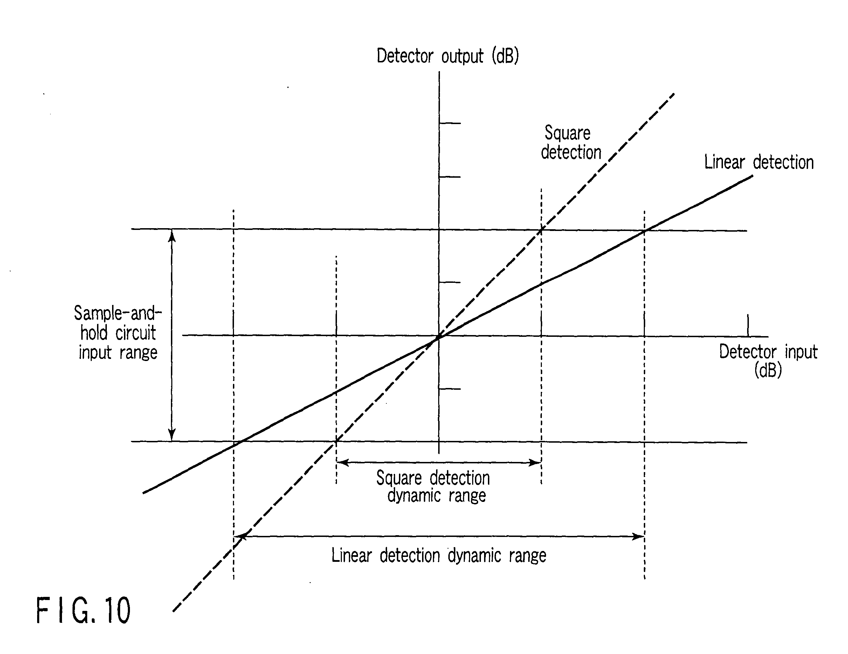

In this case, the quadrature detecting circuit 30d is a so-called linear detector, which has a dynamic range characteristic shown in FIG. 10 as the input/output characteristic (db value) in comparison with that of a square detector.

It is understood based on the dynamic range characteristic shown in FIG. 10 that, as a detector input range to fall within input ranges to the sample-and-hold circuits 30e and 30f, i.e., a dynamic range of the detector, a dynamic range of quadrature detection has a characteristic which is almost twice the characteristic of square detection.

As is apparent from the dynamic range shown in FIG. 10, a quadrature detecting scheme can detects a wave even though a detector input is small. For this reason, the quadrature detecting scheme can be effectively used in a UWB radar which is required to perform high-sensitive receiving.

Although the interior of the quadrature detector is not shown, for example, the interior has the following configuration. That is, after an output signal (or second burst signal) from the LNA 30b is divided by two by using a divider, two signals having a phase difference of 90° are generated by a hybrid circuit. Two mixers are used to mix the two signals with second burst signals (output signals from the LNA 30b) divided by two to have equal phases, thereby obtaining two-channel output signals of the two baseband components I and Q.

The I and Q signals are input to the two-channel sample-and-hold circuits 30e and 30f.

The sample-and-hold circuits 30e and 30f extract baseband components I' and Q' at a predetermined timing while the second pulse Pb is input.

The baseband components I' and Q' converted into digital values by analog-to-digital (A/D) converters 35 and 36, respectively. The digital values are input to a signal processing unit 40.

The signal processing unit 40 calculates an amplitude value V of a reception signal R' from the baseband components I' and Q' and compares the amplitude with a predetermined threshold value r. When the amplitude value V is larger than the threshold value r, it is determined that an object 1a which reflects a short pulse wave exists in the exploration target space 1. The signal processing unit 40 notifies the control unit 50 of information including the determination result or the like.

The signal processing unit 40 determines that the object 1a which reflects the short pulse wave exists in the exploration target space 1 when the amplitude value V of the reception signal R' calculated from the baseband components I' and Q' is the threshold value r or less. The signal processing unit 40 notifies the control unit 50 of information including the determination result or the like.

The control unit 50 performs various controls to the pair pulse generator 21, the transmitting unit 25, and the receiving unit 30 based on the information from the signal processing unit 40, collects information such as a distance and a size about the object 1a existing inn the exploration target space 1. If necessary, the control unit 50 generates an alarm.

The control unit 50 variably controls an interval (delay time) Td between the first pulse Pa and the second pulse Pb output from the pair pulse generator 21 to make an exploration distance variable.

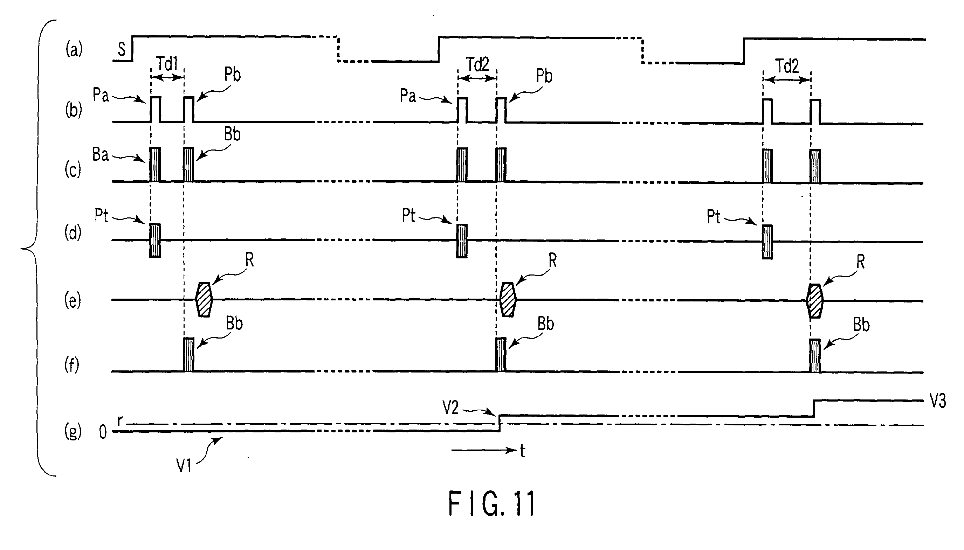

FIG. 11 is a timing chart shown to explain an operation performed when the distance of an exploration target is gradually increased.

In this case, the control unit 50, as shown in (a) of FIG. 11, the transmission designation signal S is output to the pair pulse generator 21 at a predetermined frequency (for example, 1 $\mu$s), and the delay time Td (i.e., the frequency data Df described above) of the second pulse Pb with respect to the first pulse Pa is sequentially considerably changed.

With this control, the interval between the first pulse Pa and the second pulse Pb output from the pair pulse generator 21 is gradually increased as shown by Td1, Td2, ... , in (b) of FIG. 11.

At this time, in order to prevent an unexplored area from being made, the distance between a delay time Td(i) and a delay time Td(i+1) is set to be equal to a pulse width (1 ns) of the short pulse wave Pt emitted into the exploration target space 1.

More specifically, the interval between the first pulse Pa and the second pulse Pb increases in units of 1 ns. Accordingly, the interval between the first burst wave Ba and the second burst wave Bb output from the burst oscillator 22 gradually increases as shown in (c) of FIG. 14.

The first burst wave Ba oscillation-output in synchronism with the first pulse Pa is input to the transmitting unit 25 by the switch 23. From the transmitting unit 25, as shown in (d) of FIG. 11, the short pulse wave Pt corresponding to the first burst wave Ba is emitted into the exploration target space 1.

When the reflected wave Pr from the object 1a which receives the short pulse wave Pt is received by the receiving unit 30, the reception signal R is input to the quadrature detecting circuit 30d as shown in (e) of FIG. 14.

Therefore, when the second burst wave Bb is input to the quadrature detecting circuit 30d at a timing different from that of the reception signal R before the threshold value r is input to the quadrature detecting circuit 30d as shown by a left part in (f) of FIG. 14, an amplitude value V1 obtained based on the baseband components I' and Q' becomes almost zero (noise component) as shown in (g) of FIG. 11 and does not exceed the threshold value r. For this reason, at this stage, the object 1a is not detected.

As indicated by central parts in (a) to (g) of FIG. 11, the interval between the pulses Pa and Pb increases from Td1 to Td2, and the second burst wave Bb is input to the quadrature detecting circuit 30d at a timing overlapping a head portion of the reception signal R. At this time, an amplitude value V2 obtained based on the baseband components I' and Q' is larger than the threshold value r to detect the existence of the object 1a.

Furthermore, as indicated by right parts in (a) to (g) of FIG. 11, the interval between the pulses Pa and Pb increases to Td3, and the second burst wave Bb and the reception signal R are input to the quadrature detecting circuit 30d at a timing at which the second burst wave Bb and the reception signal R overlap. At this time, an amplitude value V3 obtained based on the baseband components I' and Q' further increases. When the same processes as described above are repeated to further increase the interval between the pulses Pa and Pb, time for which the second burst wave Bb and the reception signal R overlap is shortened, and the amplitude value V of the reception signal R obtained based on the baseband components I' and Q' gradually decreases.

Therefore, a pulse interval Tdx obtained when the maximum amplitude value V is obtained is calculated, and light velocity $\times$ Tdx/2 is calculated. At this time, a distance to the object 1a can be recognized.

A material (having a high reflectance or not) or the like of the object 1a can also be estimated based on the maximum amplitude value or the like.

The control unit 50 performs an exploration process described above to calculate information such as the existence, the distance, and the like of the object 1a. If necessary, for example, when an object having a high reflectance is close to the control unit 50, the control unit 50 outputs an alarm to perform warning.

As described above, in a configuration in which the first burst wave Ba and the second burst wave Bb are distributed to the transmitting unit 25 and the receiving unit 30 by the switch 23, the first burst wave Ba may leak to the receiving unit 30 through the switch 23.

Therefore, as described above, the on/off ratio of the switch 23 is about 35 to 51 dB, and a level of a leakage component of the first burst wave Ba is very low. For this reason, the level of the leakage component at this time does not reach a level at which the quadrature detecting circuit 30d normally operates, and a detection output is negligibly small.

In contrast to this, the second burst wave Bb may leaks to the transmitting unit 25 through the switch 23.

Therefore, as in the above description, the level of the leakage component is very low, and output time is very short, i.e., about 1 ns. As a consequence, an output of an original short pulse is not limited by the leakage component obtained at this time, and the spectrum can be set in a regulated spectrum mask.

(Second Embodiment)

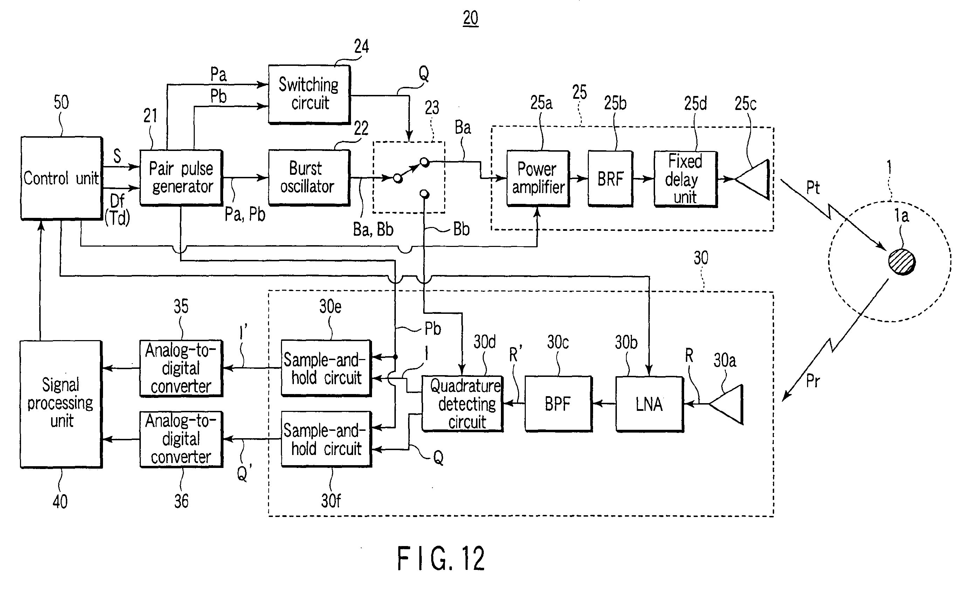

FIG. 12 is a block diagram shown to explain a configuration of a short range radar 20' according to a second embodiment of the present invention.

The same reference numerals as in the configuration of the short range radar 20 according to the first embodiment shown in FIG. 1 denote the same parts in the configuration in FIG. 12, and a description thereof will be omitted.

In the first embodiment, the first pulse Pa and the second pulse Pb and the second pulse Pb are generated in synchronism with timings of a rising edge and a decaying edge of a variable cycle pulse Pe. For this reason, the cycle of the variable cycle pulse Pe must be shortened to, e.g., 1 ns to make the interval between a first pulse Pa and a second pulse Pb zero. The short range radar 20' may not be difficult to be realized, and very short-distance exploration may be difficult.

Even though pairs of pulses having short intervals can be generated by a pair pulse generator 21, a switching speed of the switch 23 must be made very high. With respect to this point, the short range radar 20' may be difficult to be realized.

In the short range radar 20' according to the second embodiment, the first burst wave Ba output from the switch 23 to the transmitting unit 25 is caused to be behind by predetermined time by means of a fixed delay unit 25d to make it possible to solve the problem of the difficulty of the very short-distance exploration.

In this case, predetermined delay time obtained by adding a pulse width (1 ns) of a short pulse wave Pt emitted into an exploration target space 1 to minimum delay time Td0 which can be set between a first pulse Pa and a second pulse Pb which can be output in the pair pulse generator 21 is given by the fixed delay unit 25d. As a result, delay time of the second burst wave Bb to the short pulse wave Pt emitted into the space can be made equal to the pulse width of the second burst wave Bb, so that very short-distance exploration can be performed.

In FIG. 12, an insertion position of the fixed delay unit 25d is also used as a feeding line to an antenna 25c.

Therefore, the fixed delay unit 25d can be inserted at an arbitrary position between the switch 23 and the antenna 25c, and a plurality of fixed delay units may be distributionally inserted into the transmitting unit 25.

The plurality of fixed delay units 25d having different delay times are configured to be selectively inserted into the transmitting unit 25 to make an exploration distance variable at wide intervals. The wide intervals can also be interpolated by variable control of the delay time Td of the pair pulse generator 21.

In the above embodiment, the first burst wave Ba and the second burst wave Bb are distributed to the transmitting unit 25 and the receiving unit 30 by the switch 23.

Therefore, only a switch (the first switch 23a) which turns on/off the circuit between the burst oscillator 22 and the transmitting unit 25 is arranged, and only the first burst wave Ba is input to the transmitting unit 25 as in the above configuration, and the first burst wave Ba and the second burst wave Bb may be input to the receiving unit 30.

In this case, the second burst wave Bb is input to the quadrature detecting circuit 30d as an original local signal, and the first burst wave Ba is also input to the quadrature detecting circuit 30d as a local signal.

Consequently, a reception signal input to the quadrature detecting circuit 30d at a timing equal to that of the local signal obtained by the first burst wave Ba is a noise component unnecessary for exploration. In addition, since the timing is known, the noise component can be easily removed by a signal processing unit 40.

According to the present invention described above, in order to solve the problems of the prior art, there can be provided a short range radar comprising: a transmitting system which generates one pair of pulses including a first pulse having a predetermined width and a second pulse having a width equal to that of the first pulse and being behind by predetermined time each time a transmission designation signal is received and which emits a short pulse wave of a burst wave into a space based on the first pulse serving as a first generated pulse of the pair of pulses to prevent interference with the RR radiowave prohibited band while conforming to a spectrum mask regulated as a UWB radar; and a receiving system which performs quadrature detection by using the second pulse serving as a second generated pulse of the pair of pulses to make it possible to perform highly sensitive detection with a wide dynamic range, and a method of controlling the short range radar.

**Claims**

1. A short range radar comprising:

   a pair pulse generator which generates one pair of pulses including a first pulse having a predetermined width and a second pulse having a width equal to that of the first pulse and being behind from the first pulse by preset time each time the pair pulse generator receives a transmission designation signal;
   a burst oscillator which performs an oscillation operation in a period in which one pair of pulses including the first and second pulses output from the pair pulse generator are received to output a signal having a predetermined carrier frequency as a first burst wave in synchronism with the first pulse and also output the signal of the predetermined carrier frequency as a second burst wave in synchronism with the second pulse, and which stops the oscillation operation in a period in which one pair of pulses including the first and second pulses are not input;
   a transmitting unit which emits the first burst wave output in synchronism with the first pulse from the burst oscillator into an exploration target space as a short pulse wave;
   a receiving unit which receives a reflected wave of the first burst wave emitted from the transmitting unit into the exploration target space and detects the received signal by using a second burst wave output from the burst oscillator in synchronism with the second pulse as a local signal; and
   a control unit which outputs the transmission designation signal to the pair pulse generator and variably controls an interval between the first pulse and the second pulse output from the pair pulse generator.

2. The short range radar according to claim 1, **characterized in that**,
   the receiving unit quadrature-detects the received signal by using the second burst wave as a local signal.

3. The short range radar according to claim 1, **characterized by** further comprising:

   a switch which is arranged between the burst oscillator and the transmitting unit and between the burst oscillator and the receiving unit to selectively input the first or second burst wave output from the burst oscillator to any one of the transmitting unit and the receiving unit; and
   a switching circuit which controls the switch to input the first burst wave output from the burst oscillator to the transmitting unit and to input the second burst wave to the receiving unit.

4. The short range radar according to claim 1, **characterized in that**
   the transmitting unit has a fixed delay unit which. gives fixed delay to the first burst wave output from the burst oscillator.

5. The short range radar according to claim 1, **characterized in that**
   the pair pulse generator comprises:

   a direct digital synthesizer (DDS) which receives a clock signal having a predetermined frequency and frequency data having a predetermined number of bits L corresponding to the delay time from the control unit, sequentially reads waveform data such that address designation is performed by a value obtained by integrating the frequency data by a cycle of the clock signal to an inner read-only memory having an address length in which waveform data of one cycle of a sine wave is stored, and digital-to-analog-converts the waveform data to output a sinusoidal signal having a frequency determined by a predetermined frequency of the clock signal, the address length, and the frequency data;
   a low-pass filter (LPF) which removes a high-frequency component of the sinusoidal signal output from the DDS to output a sine-wave signal;

a waveform shaping circuit which performs a waveform shaping process to the sine-wave signal output from the LPF, and outputs two phases of first and second variable cycle pulses having a duty ratio of 50, inverted levels, a cycle corresponding to a frequency of the sinusoidal signal;

a first pulse generating circuit which receives the first variable cycle pulse output from the waveform shaping circuit and outputs a first pulse having a predetermined width and synchronized with a timing at which a level of the first variable cycle pulse decays first after the transmission designation signal is input;

a second pulse generating circuit which receives the second variable cycle pulse output from the waveform shaping circuit and outputs a second pulse having a predetermined width and synchronized with a timing at which a level of the second variable cycle pulse decays first after the transmission designation signal is input; and

an OR circuit which calculates a logical OR of the first pulse output from the first pulse generating circuit and the second pulse output from the second pulse generating circuit.

6. The short range radar according to claim 1, **characterized in that**
the burst oscillator is configured such that an output from an amplifier having a resonator as a load is positively fed back to an input side of the amplifier by a feedback circuit to be oscillated at a resonant frequency of the resonator, and is configured such that a circuit between an input terminal or an output terminal of the amplifier and a ground line is turned on or off by a switch circuit to switch the burst oscillator between an oscillation operation state and an oscillation stop state.

7. The short range radar according to claim 1, **characterized in that**
the burst oscillator is configured such that an output from an amplifier having a resonator as a load is positively fed back to an input side of the amplifier by a feedback circuit to be oscillated at a resonant frequency of the resonator, and is configured such that a switch circuit is connected to a power supply line of the amplifier to on/off-control power supply to the amplifier and to switch the burst oscillator between an oscillation operation state and an oscillation stop state.

8. The short range radar according to claim 1, **characterized in that**
the burst oscillator is configured such that an output from an amplifier having a resonator as a load is positively fed back to an input side of the amplifier by a feedback circuit to be oscillated at a resonant frequency of the resonator, and is configured such that a first switch circuit is connected to a power supply line of the amplifier to on/off-control power supply to the amplifier and to switch the burst oscillator between an oscillation operation state and an oscillation stop state, and, by using a second switch circuit which performs a reverse opening/closing operation of the operation of the first switch circuit, the second switch circuit is closed in only a period in which the power supply to the amplifier is stopped by the first switch circuit to flow a predetermined current to the resonator, and the second switch circuit is opened at a timing at which a power is supplied to the amplifier to cause the resonator to generate a signal component of a resonant frequency obtained by a transient phenomenon, so that the burst oscillator is rapidly shifted to the oscillation operation state.

9. The short range radar according to claim 3, **characterized in that**
the switch has a common contact and first and second contacts, and is constituted by a 1-circuit-2-contact type of switch which inputs the first burst wave to the transmitting unit through the common contact and the first contact and inputs the second burst wave to the receiving unit through the common contact and the second contact.

10. The short range radar according to claim 3, **characterized in that**
the switch is constituted by a first switch which inputs the first burst wave to the transmitting unit and a second switch which inputs the second burst wave to the receiving unit.

11. The short range radar according to claim 10, **characterized in that**
each of the first and second switches comprises:

first to fourth diodes which are bridge-connected to one another;
a fifth diode which is reversely inserted between a ground and a connection point of two reversely connected first diodes of the first to fourth diodes;
a sixth diode which is forwardly connected between the ground and a connection point of two reversely connected second diodes of the first to fourth diodes; and
a current source which is connected between the connection point of the two first diodes and reverse connection points of the two second diodes and has a current the direction of which is inverted depending on a level of a switching signal from the switching circuit, and

only when the direction of the current from the current source is a direction in which the fifth and sixth diodes are turned off and the first to fourth diodes are turned on, a first or second burst wave input to a connection point of the first and third diodes is output from a connection point of the second and fourth diodes.

**12.** A method of controlling a short range radar, comprising:

a step of preparing a pair pulse generator, a burst oscillator, a receiving unit, a transmitting unit, and a control unit;
a step of causing the control unit to output a transmission designation signal;
a step of causing the pair pulse generator to generate one pair of pulses including a first pulse having a predetermined width and a second pulse having a width equal to that of the first pulse and being behind from the first pulse by preset time each time the transmission designation signal from the control unit is received;
a step of causing the control unit to variably control an interval between the first pulse and the second pulse output from the pair pulse generator;
a step of causing the burst oscillator to perform an oscillation operation in a period in which one pair of pulses including the first and second pulses output from the pair pulse generator are received to output a signal having a predetermined carrier frequency as a first burst wave in synchronism with the first pulse and also output the signal having the predetermined carrier frequency as a second burst wave in synchronism with the second pulse and to stop the oscillation operation in a period in which one pair of pulses including the first and second pulses are not input;
a step of causing the transmitting unit to emit the first burst wave output from the burst oscillator in synchronism with the first pulse into an exploration target space as a short pulse wave; and
a step of causing the receiving unit to receive a reflected wave of the short pulse wave obtained by the first burst wave emitted from the transmitting unit into the exploration target space and to detect the received signal by using a second burst wave output from the burst oscillator in synchronism with the second pulse as a local signal.

**13.** The method of controlling a short range radar, according to claim 12, **characterized in that**
the step of detecting the received signal quadrature-detects the received signal by using the second burst wave as a local signal by means of receiving unit.

**14.** The method of controlling a short range radar, according to claim 12, **characterized by** further comprising:

a step of preparing a switch and a switching circuit;
a step of causing the switch to selectively input the first and second burst waves output from the burst oscillator to any one of the transmitting unit and the receiving unit;
a step of causing the switching circuit to control the switch to input the first burst wave output from the burst oscillator to the transmitting unit and to input the second burst wave to the receiving unit.

**15.** The method of controlling a short range radar, according to claim 12, **characterized in that**
the transmitting unit is provided with a fixed delay unit which gives fixed delay to the first burst wave.

**16.** The method of controlling a short range radar, according to claim 12, **characterized in that**
the pair pulse generator comprises:

a direct digital synthesizer (DDS) which receives a clock signal having a predetermined frequency and frequency data having a predetermined number of bits L corresponding to the delay time from the control unit, sequentially reads waveform data such that address designation is performed by a value obtained by integrating the frequency data by a cycle of the clock signal to an inner read-only memory having an address length in which waveform data of one cycle of a sine wave is stored, and digital-to-analog-converts the waveform data to output a sinusoidal signal having a frequency determined by a predetermined frequency of the clock signal, the address length, and the frequency data;
a low-pass filter (LPF) which removes a high-frequency component of the sinusoidal signal output from the DDS to output a sine-wave signal;
a waveform shaping circuit which performs a waveform shaping process to the sine-wave signal output from the LPF, and outputs first and second variable cycle pulses having a duty ratio of 50, inverted levels, a cycle corresponding to a frequency of the sinusoidal signal, and two phases;
a first pulse generating circuit which receives the first variable cycle pulse output from the waveform shaping circuit and outputs a first pulse having a predetermined width and synchronized with a timing at which a level of the first variable cycle pulse decays first after the transmission designation signal is input;

a second pulse generating circuit which receives the second variable cycle pulse output from the waveform shaping circuit and outputs a second pulse having a predetermined width and synchronized with a timing at which a level of the second variable cycle pulse decays first after the transmission designation signal is input; and an OR circuit which calculates a logical OR of the first pulse output from the first pulse generating circuit and the second pulse output from the second pulse generating circuit.

17. The method of controlling a short range radar, according to claim 12, **characterized in that**
the burst oscillator is configured such that an output from an amplifier having a resonator as a load is positively fed back to an input side of the amplifier by a feedback circuit to be oscillated at a resonant frequency of the resonator, and is configured such that a circuit between an input terminal or an output terminal of the amplifier and a ground line is turned on or off by a switch circuit to switch the burst oscillator between an oscillation operation state and an oscillation stop state.

18. The method of controlling a short range radar, according to claim 12, **characterized in that**
the burst oscillator is configured such that an output from an amplifier having a resonator as a load is positively fed back to an input side of the amplifier by a feedback circuit to be oscillated at a resonant frequency of the resonator, and is configured such that a switch circuit is connected to a power supply line of the amplifier to on/off-control power supply to the amplifier and to switch the burst oscillator between an oscillation operation state and an oscillation stop state.

19. The method of controlling a short range radar, according to claim 12, **characterized in that**
the burst oscillator is configured such that an output from an amplifier having a resonator as a load is positively fed back to an input side of the amplifier by a feedback circuit to be oscillated at a resonant frequency of the resonator, and is configured such that a first switch circuit is connected to a power supply line of the amplifier to on/off-control power supply to the amplifier and to switch the burst oscillator between an oscillation operation state and an oscillation stop state, and, by using a second switch circuit which performs a reverse turning on/off operation of the operation of the first switch circuit, the second switch circuit is tuned on in only a period in which the power supply to the amplifier is stopped by the first switch circuit to flow a predetermined current to the resonator, and the second switch circuit is turned off at a timing at which a power is supplied to the amplifier to cause the resonator to generate a signal component of a resonant frequency obtained by a transient phenomenon, so that the burst oscillator is rapidly shifted to the oscillation operation state.

FIG. 1

EP 1 736 795 A1

FIG.2

FIG.3

FIG.4

<u>22</u>

22b

22c

22f

Pa, Pb ⟶

Resonator

22e

Ba, Bb

F I G. 5

<u>22</u>

22b

22f

22c

Pa, Pb ⟶

Ba, Bb

Resonator ⟶ 22e

Power supply

F I G. 6

22b        22

22f

→ Ba, Bb

Resonator ──22e

22c

Pa, Pb ──                                    ──22g

Power supply                Power supply

## FIG. 7

24 ── Switching circuit                        23

                              23a
                                              Ba
                                        ──→ To transmitting unit 25

22 ── Burst oscillator

Ba, Bb                        Bb
                              23b     ──→ To receiving unit 30

## FIG. 8

D5

D1        D2        I

Ba, Bb ──→        Ba, Bb ──→        ──Q

D3        D4

D6

## FIG. 9

FIG. 10

EP 1 736 795 A1

F I G. 11

EP 1 736 795 A1

FIG.12

FIG. 13    (PRIOR ART)

FIG. 14    (PRIOR ART)

F I G. 15   (PRIOR ART)

## INTERNATIONAL SEARCH REPORT

| International application No. |
| --- |
| PCT/JP2006/301349 |

A. CLASSIFICATION OF SUBJECT MATTER
*G01S7/282*(2006.01), *H03B5/06*(2006.01), *H04B1/69*(2006.01)

According to International Patent Classification (IPC) or to both national classification and IPC

B. FIELDS SEARCHED

Minimum documentation searched (classification system followed by classification symbols)
*G01S1/00-17/95, H03B5/06, H04B1/69*

Documentation searched other than minimum documentation to the extent that such documents are included in the fields searched

| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2000-511281 A  (The Regents of the University of California), 29 August, 2000 (29.08.00), Page 9, lines 20 to 23; pages 21 to 23 & WO 97/045753 A       & EP 901642 A | 1-2,12-13<br>3-4,6-11,<br>14-15,17-19 |
| X<br>Y | JP 2002-507728 A  (MCEWAN Thomas E.), 12 March, 2002 (12.03.02), Par. Nos. [0034] to [0035] & WO 99/047945 A       & EP 1064566 A | 1-2,12-13<br>3-4,6-11,<br>14-15,17-19 |
| Y | Ian Gresham, "Ultra-Wideband Radar Sensors for Short-Range Vechicular Applications", IEEE TRANSACTIONS ON MICROWAVE THEORY AND TECHNIQUES, Vol.52, No.9, 2004, pages 2105 to 2122 | 3,9-11,14 |

☒ Further documents are listed in the continuation of Box C. ☐ See patent family annex.

| \* | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>03 April, 2006 (03.04.06) | Date of mailing of the international search report<br>18 April, 2006 (18.04.06) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/301349 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 05-312938 A (Ikuo ARAI),<br>26 November, 1993 (26.11.93),<br>Claim 1; Figs. 1 to 2<br>(Family: none) | 4,15 |
| Y | JP 56-002709 A (Motorola, Inc.),<br>13 January, 1981 (13.01.81),<br>Pages 3 to 4, upper column<br>& US 4272736 A          & EP 0021566 A | 6-8,17-19 |
| Y | JP 63-133704 A (RCA Corp.),<br>06 June, 1988 (06.06.88),<br>Page 2<br>& US 4727339 A          & EP 00266185 A | 6-8,17-19 |
| Y | JP 61-137404 A (Sony Corp.),<br>25 June, 1986 (25.06.86),<br>Page 2, lower right column, 3rd line from the<br>bottom to page 3, line 6<br>(Family: none) | 6-8,17-19 |
| A | JP 2004-507768 A (Raytheon Co.),<br>11 March, 2004 (11.03.04),<br>Full text; all drawings<br>& WO 02/018970 A          & EP 1314049 A<br>& US 6459404 B1 | 5,16 |
| A | Hiroshi KONDO, "Junmirihatai Kotaiiki Impulse<br>Radar no Kaihatsu -24GHz-tai UWB Kinkyori<br>Radar-yo RF Module-", Proceedings of the IEICE<br>Conference, 2004 Society, 2004, pages S_30 to<br>S_31 | 10-11 |
| A | Microfilm of the specification and drawings<br>annexed to the request of Japanese Utility<br>Model Application No. 186395/1983(Laid-open<br>No. 093331/1985)<br>(Yokogawa-Hewlett-Packard, Ltd.),<br>26 June, 1985 (26.06.85),<br>Figs. 1 to 2<br>(Family: none) | 11 |

Form PCT/ISA/210 (continuation of second sheet) (April 2005)

## INTERNATIONAL SEARCH REPORT

International application No.

PCT/JP2006/301349

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:

See extra sheet.

1. ☒ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2005)

**INTERNATIONAL SEARCH REPORT**

International application No.

PCT/JP2006/301349

Continuation of Box No.III of continuation of first sheet(2)

Cited documents
D1: JP 2000-511281 A (page 9, lines 20 to 23, pages 21 to 23, Figs. 9 to 11)
D2: JP 2002-507728 A (Par. Nos. [0034] to [0035], Figs. 1 to 5)

1.
    Both of documents D1 and D2 disclose a short pulse radar using an oscillator for oscillating a burst only when a pulse is inputted, radiating a first burst wave corresponding to a first pulse into a space to be searched, detecting a reflected signal by the second burst wave corresponding to a second pulse, and variably controlling the interval between the first pulse and the second pulse.
    Accordingly, the inventions of claims 1-2, 12-13 have no novelty or inventive step considering the aforementioned conventional technique.

2.
    The inventions of claims 1-2, 12-13 have no technical feature contributing over the prior art. Accordingly, the inventions of claims 1-19 do not satisfy the requirement of unity of inventions stipulated in PCT Rule 13.
    Considering the conventional techniques D1 or D2, the claims are divided into the following groups.
        Claims 3, 9-14:   a switch for switching a signal to a transmission
                          unit or a reception unit
        Claims 4, 15:   a fixed delay device
        Claims 5, 16:   A pair pulse generation by DSS
        Claims 6-8, 17-19:   a bust oscillator switch
    There is no technical feature common to these inventions for making a contribution over the prior art. Moreover, the countermeasure for the high frequency/high speed switching is a known object and there is no technical relationship among specific solutions having no common feature.

3.
    Consequently, it is obvious that the aforementioned four groups of inventions do not satisfy the requirement of unity of invention stipulated in PCT Rule 13.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005117256 A
- JP 2005020859 W